# DEMANDE DE BREVET EUROPEEN

(11) **EP 3 874 939 A1**
(43) Date de publication de la demande: **08.09.2021**
(21) Numéro de dépôt: 21305254.1
(22) Date de dépôt: 03.03.2021
(51) Int. Cl.: A01G 27/00, A01G 27/02, A01G 27/06, A01G 9/04

(54) **DISPOSITIF FAVORISANT L'APPORT D'AIR ET D'EAU AUX RACINES DES VEGETAUX EN CULTURE HORS-SOL**

(30) Priorité: 03.03.2020 FR 2002162
(71) Demandeur: C E P, 63550 Saint-Remy-sur-Durolle (FR)
(72) Inventeur: DAMBRICOURT, Pierre, 63120 Vollore-Ville (FR); SECHAL, Roselyne, 63250 Celles-sur-Durolle (FR); TOURNAIRE, Jean-Louis, 63350 Bulhon (FR)
(74) Mandataire: Cabinet Laurent & Charras

(57) **Abrégé**

La présente invention concerne un dispositif pour recevoir des végétaux, comprenant une partie supérieure (1) comprenant un récipient (2) comprenant une surface d'appui ajourée horizontale (4) comprenant des ouvertures et une paroi latérale qui s'étend autour de la surface d'appui (4), la surface d'appui (4) et au moins une partie de la paroi latérale du récipient (2) délimitant un volume interne adapté pour recevoir du substrat et des végétaux, ou un contenant (11) de culture végétale, et une partie inférieure comprenant une coupelle (5) comprenant une paroi latérale délimitée par un fond et une surface supérieure ouverte, le fond et la paroi latérale de la coupelle (5) délimitant un volume interne adapté pour contenir un liquide, le dispositif présentant un élément de rehaussement (3), comprenant des ouvertures pour le passage de l'air, qui ménage un espace entre la surface transversale située au niveau du point le plus bas de la paroi latérale du récipient (2) formant la base du récipient (2) et la surface supérieure ouverte de la coupelle (5), la surface d'appui ajourée (4) étant située au-dessus de la surface ouverte de la coupelle (5).

## Description

### Domaine de l'invention

La présente invention concerne un dispositif favorisant l'apport d'air et d'eau au substrat dans lequel poussent les végétaux. Ce dispositif est un contenant de culture (pot) ou un cache-pot. Il comprend une réserve d'eau et peut être équipé d'un capteur de niveau d'eau.

Le domaine d'utilisation de la présente invention concerne notamment les plantes d'intérieur nécessitant un apport d'eau régulier.

### Etat antérieur de la technique

Les végétaux peuvent être plantés dans des contenants de culture. Ces contenants peuvent être rigides ou semi-rigides, il s'agit alors de pots pouvant être en toutes sortes de matériau, par exemple en terre cuite ou en plastique. Il existe également des sacs souples. Ceux-ci peuvent être, par exemple, en plastique ou en textile.

Afin de faciliter le drainage de l'eau d'arrosage, le fond des pots comprend généralement une ouverture couramment appelée trou de drainage. Le drainage de l'eau excédentaire, c'est-à-dire non consommée par la plante, permet d'éviter l'asphyxie et le pourrissement des racines du fait d'une humidité du substrat trop importante. L'eau drainée est généralement collectée dans une soucoupe indépendante du pot.

De même que les pots, les sacs en plastiques ou en matières très faiblement perméables à l'eau présentent généralement des trous de drainages. Les sacs en textile ne présentent généralement pas de trous de drainage, l'eau s'évacuant au travers de toute la surface, perméable, du sac.

Pour des raisons esthétiques ou pratiques, les contenants de culture peuvent être intégrés au sein d'un cache-pot.

D'autre part, il existe des pots ou cache-pots permettant une alimentation en eau continue grâce à la présence d'une réserve d'eau. Un capteur permet souvent d'indiquer le niveau d'eau dans la réserve d'eau. Ce capteur peut notamment se présenter sous la forme d'une bille, visible à travers la vitre d'une fenêtre transparente percée dans la paroi de la réserve, et évoluant de haut en bas avec le niveau d'eau. Or ce type de capteur mécanique n'est pas nécessairement fiable notamment lorsque la fenêtre permettant de voir la bille est sale où abîmée, ou lorsque la bille est coincée dans son logement.

A titre d'exemple, le document WO 2001/97598 décrit un pot de fleurs à double paroi. Ce dispositif permet une alimentation continue en eau grâce à un textile apportant l'humidité nécessaire aux végétaux par capillarité à partir de l'eau contenue dans la double paroi.

Les documents US 2,206,694, US 4,224,764, US 2009/056219, EP 0 773 462 et DE 101 25 459 décrivent des dispositifs constitués d'un ensemble pot + coupelle ou de pots ayant une double paroi constituant une réserve d'eau.

Quand bien même ce type de dispositifs s'avère relativement satisfaisant pour optimiser l'alimentation en eau continue d'une plante, il demeure néanmoins un besoin de développer un dispositif assurant non seulement une alimentation en eau optimale mais aussi favorisant l'apport d'air aux racines afin d'optimiser la respiration racinaire : ces deux facteurs étant essentiels à la santé et la croissance des plantes.

La présente invention permet de répondre à ce besoin grâce à un dispositif intégrant une réserve d'eau et facilitant la respiration racinaire de la plante.

### Exposé de l'invention

La présente invention repose sur un dispositif favorisant la respiration racinaire et l'optimisation de l'apport d'eau, deux facteurs de santé et de croissance bien identifiés des végétaux. Ce dispositif présente notamment un volume permettant aux racines des végétaux de sortir du contenant de culture dans lequel ils sont plantés. En d'autres termes, ce dispositif est (1) soit un contenant de culture (pot) intégrant une réserve d'eau amovible et étant destiné à recevoir du substrat dans lequel sont plantés des végétaux, (2) soit un cache-pot dans lequel on peut alors placer un contenant de culture. Dans les deux cas, le contenant de culture présente des trous de drainage et/ou une surface perméable à l'air et à l'eau. Ainsi, le substrat de culture est aéré soit par des trous de drainage soit par la perméabilité d'au moins une partie de sa surface.

De manière générale, les végétaux regroupent les plantes d'intérieur, les plantes d'extérieur, les herbes, par exemples les herbes aromatiques, les légumes, les arbres ou les arbustes. Il peut notamment s'agir de végétaux à fleurs ou à fruits.

La présente invention concerne un dispositif pour recevoir des végétaux comprenant :
1/ une partie supérieure comprenant :
   - un récipient comprenant une surface d'appui ajourée horizontale et une paroi latérale qui s'étend autour de la surface d'appui, la surface d'appui et au moins une partie de la paroi latérale du récipient délimitant un volume interne adapté pour recevoir du substrat et des végétaux, ou un contenant de culture végétale,
2/ une partie inférieure comprenant :
   - une coupelle comprenant un fond et une paroi latérale qui s'étend autour du fond, le fond et la paroi latérale de la coupelle délimitant un volume interne adapté pour contenir un liquide,
   le dispositif présentant un espace entre la paroi latérale du récipient et la paroi latérale de la coupelle en regard l'une de l'autre (au niveau vertical).

Plus précisément, la présente invention concerne un dispositif pour recevoir des végétaux comprenant :
1/ une partie supérieure comprenant :
   - un récipient comprenant une surface d'appui ajourée horizontale comprenant des ouvertures et une paroi latérale qui s'étend autour de la surface d'appui, la surface d'appui et au moins une partie de la paroi latérale du récipient délimitant un volume interne adapté pour recevoir du substrat et des végétaux, ou un contenant de culture végétale,
2/ une partie inférieure comprenant :
   - une coupelle comprenant une paroi latérale délimitée par un fond et une surface supérieure ouverte, le fond et la paroi latérale de la coupelle délimitant un volume interne adapté pour contenir un liquide,
le dispositif présentant un élément de rehaussement, comprenant des ouvertures pour le passage de l'air (rehausseur ajouré), qui ménage un espace entre la base du récipient et la surface supérieure ouverte de la coupelle,
la surface d'appui ajourée étant située au-dessus de la surface ouverte de la coupelle.

Le dispositif comprend donc une partie supérieure et une partie inférieure, séparées par un espace vertical. La surface d'appui ajourée et la surface supérieure ouverte de la coupelle sont en regard l'une de l'autre, au niveau horizontal.

La base du récipient correspond à la surface transversale située au niveau du point le plus bas de la paroi latérale du récipient.

Ce dispositif permet la circulation d'air, depuis l'extérieur vers l'intérieur du dispositif via l'espace. L'air peut ainsi atteindre les racines en passant à travers le rehausseur ajouré et la surface d'appui ajourée.

La surface d'appui ajourée est située au-dessus de la surface ouverte de la coupelle. Ainsi, le volume interne du récipient de la partie supérieure n'entre pas dans le volume interne de la coupelle de la partie inférieure. La surface d'appui ajourée peut être dans l'espace séparant les parois latérales du récipient et de la coupelle. Elle peut donc être dans le récipient, au fond du récipient ou entre le récipient et la coupelle. La surface d'appui ajourée n'est pas dans la coupelle.

La surface d'appui ajourée peut être plate ou structurée, par exemple une vue en coupe en forme d'escalier. Ainsi, la surface d'appui peut présenter un seul niveau horizontal ou au moins deux niveaux horizontaux (par exemple une vue en coupe en forme d'escalier). Lorsque la surface d'appui ajourée présente plusieurs niveaux, elle peut avoir son niveau principal (plus grande aire ou surface d'appui) en dessous de la partie basse de la paroi latérale du récipient.

Le dispositif présente un espace entre la paroi latérale du récipient et la paroi latérale de la coupelle en regard l'une de l'autre au niveau vertical. Plus particulièrement, la paroi latérale du récipient et la paroi latérale de la coupelle sont avantageusement dans le prolongement l'une de l'autre, mais séparées par un espace.

Lors de l'utilisation du dispositif selon l'invention, la surface d'appui est au-dessus du niveau d'eau. Le substrat est toujours au-dessus de l'eau, il ne peut pas être immergé/noyé. La réserve d'eau n'atteint pas la surface d'appui, assurant la bonne aération du substrat et des racines.

Selon un mode de réalisation particulier, la surface d'appui ajourée horizontale constitue le fond du récipient de la partie supérieure, elle est au niveau de la partie basse de la paroi latérale du récipient.

De manière avantageuse, le fond de la coupelle ne comprend pas de saillies ayant une hauteur supérieure à 0,1 cm, préférentiellement supérieure à 1 cm. Il est avantageusement plat.

Ce dispositif comprend également une surface d'appui dont le rôle est de supporter le substrat de culture des végétaux ou de supporter un contenant de culture végétale.

Ce dispositif correspond donc soit à un contenant de culture végétale, soit à un cache-pot destiné à recevoir un contenant de culture végétale.

La surface d'appui peut être un fond ajouré, dans le volume interne du récipient, reposant sur le rehausseur ajouré. Le rehausseur ajouré peut notamment être une jupe fixée au fond ajouré ou sur une pluralité de supports (par exemple des ergots ou des plots) émanant de la coupelle. Ainsi, le substrat de culture et le fond du contenant de culture ne sont pas en contact physique avec le fond de la coupelle. Dans ce cas, la jupe ou les supports sont dimensionnés de manière à ce que la surface d'appui soit au-dessus du rebord de la coupelle c'est-à-dire au-dessus de la surface supérieure ouverte de la coupelle. Dans le cas où le rehausseur correspond à une pluralité de supports, ces supports sont espacés les uns des autres de manière à pouvoir laisser passer l'air.

Selon un premier mode de réalisation, le dispositif selon l'invention peut comprendre une jupe fixée au récipient, séparée du volume interne par la surface d'appui, ladite jupe comprenant une paroi latérale ajourée, la jupe étant partiellement insérée dans la coupelle. Selon un deuxième mode de réalisation, la coupelle peut comprendre une pluralité de supports, la surface d'appui du récipient reposant sur la pluralité de supports.

La hauteur de la jupe est avantageusement supérieure à la hauteur de la coupelle.

Selon un mode de réalisation particulier, le dispositif comprend (est avantageusement constitué de) :
1/ une partie supérieure comprenant :
   - un récipient comprenant une surface d'appui ajourée horizontale et une paroi latérale qui s'étend autour de la surface d'appui, la surface d'appui et au moins une partie de la paroi latérale du récipient délimitant un volume interne adapté pour recevoir du substrat et des végétaux, ou un contenant de culture végétal,
   - une jupe fixée au récipient, séparée du volume interne par la surface d'appui ajourée, ladite jupe comprenant une paroi latérale ajourée,
2/ une partie inférieure comprenant :
   - une coupelle comprenant un fond et une paroi latérale qui s'étend autour du fond, le fond et la paroi latérale de la coupelle délimitant un volume interne adapté pour contenir un liquide,
   dans lequel
   la jupe étant partiellement insérée dans la coupelle,
   le dispositif présentant un espace entre la paroi latérale du récipient et la paroi latérale de la coupelle en regard l'une de l'autre.

Selon un autre mode de réalisation particulier, le dispositif comprend (est avantageusement constitué de) :
1/ une partie supérieure comprenant :
   - un récipient comprenant une surface d'appui ajourée horizontale et une paroi latérale qui s'étend autour de la surface d'appui, la surface d'appui et au moins une partie de la paroi latérale du récipient délimitant un volume interne adapté pour recevoir du substrat et des végétaux, ou un contenant de culture végétal,
2/ une partie inférieure comprenant :
   - une coupelle comprenant un fond et une paroi latérale qui s'étend autour du fond, le fond et la paroi latérale de la coupelle délimitant un volume interne adapté pour contenir un liquide,
   - une pluralité de supports,
la surface d'appui ajourée horizontale reposant sur la pluralité de supports,
le dispositif présentant un espace entre la paroi latérale du récipient et la paroi latérale de la coupelle en regard l'une de l'autre.

Quel que soit le mode de réalisation, la surface d'appui ajourée (fond ajouré) peut servir de support pour un substrat de culture mais aussi pour un contenant de culture.

Ainsi, le dispositif selon l'invention est avantageusement composé d'un récipient et d'une coupelle pouvant être solidarisés ou non. La coupelle de la partie inférieure sert de réserve d'eau.

Dans le cas où le récipient est utilisé en tant que contenant de culture (pot), ou quand il est utilisé en tant que cache-pot et que le contenant de culture possède des trous de drainage, la présence d'ouvertures dans la surface d'appui ajourée permet aux racines de coloniser et le volume interne de la coupelle défini par cette surface d'appui et par la paroi latérale et le fond de la coupelle. En favorisant la croissance des racines vers l'extérieur, on limite le risque de formation d'un enchevêtrement de racines dans le fond du contenant de culture (pot), phénomène couramment appelé chignonage, qui nuit à la qualité de leur aération.

Par ailleurs, la circulation d'air rendue possible par l'espace ménagé entre la paroi latérale du récipient et la paroi latérale de la coupelle favorise l'aération du substrat, voire, le cas échéant l'aération direct des racines, donc la respiration racinaire.

Ainsi, même lorsque les racines ne sortent pas du contenant de culture, le dispositif selon l'invention permet d'aérer le substrat (par exemple du terreau) via des trous de drainage prévus dans le contenant de culture ou via la contenant de culture lorsque celui-ci est en matériau perméable à l'air, ce qui permet donc d'aérer les racines par assimilation de l'air présent dans le substrat.

Par conséquent, dispositif selon l'invention demeure efficace même dans le cas où les racines ne sortent pas du contenant de culture.

Comme déjà indiqué, la surface d'appui peut reposer sur une jupe ou sur une pluralité de supports. Cela permet de :
- favoriser le développement des racines qui ne sont plus confinées dans le contenant de culture, tout en les protégeant de tout écrasement.
- faciliter l'alimentation en eau de la coupelle. Dans le cas de la jupe, la vue des racines, et éventuellement de la mèche d'hydratation, est masquée lorsque la partie supérieure est soulevée par l'utilisateur, ce qui procure un avantage esthétique.

En outre, la surface d'appui ajourée permet également aux racines d'éventuellement atteindre l'eau présente dans la coupelle. La plante peut donc directement puiser dans la réserve d'eau la quantité dont elle a besoin.

L'espace ménagé entre la paroi latérale du récipient et la paroi latérale de la coupelle permet de laisser passer l'air à l'intérieur du dispositif selon l'invention. Cet espace est avantageusement continu (pas interrompu) sur toute la périphérie du dispositif, c'est-à-dire entre la paroi latérale du récipient et la paroi latérale de la coupelle en regard l'une de l'autre. En d'autres termes, de manière avantageuse, la paroi latérale du récipient et la paroi latérale de la coupelle n'ont pas de points de contact physique entre elles. De manière avantageuse, la partie supérieure et la partie inférieure peuvent être en contact physique au niveau de la jupe et de la coupelle ou au niveau de la surface d'appui du récipient et de la pluralité de supports de la coupelle.

De manière avantageuse, la partie supérieure et la partie inférieure sont en contact physique uniquement au niveau de la jupe et du fond de la coupelle ou uniquement au niveau de la surface d'appui du récipient et de la pluralité de supports de la coupelle.

De manière avantageuse, un espace est ménagé entre la paroi du récipient et la paroi de la coupelle :
- dans la partie supérieure, une jupe est fixée au récipient, séparée du volume interne du récipient par la surface d'appui ajourée, ladite jupe comprenant une paroi latérale ajourée est partiellement insérée dans la coupelle, et/ou
- dans la partie inférieure, une pluralité de supports (par exemple des ergots en saillie de la paroi de la coupelle) sert de support à la partie supérieure.

Dans tous les cas, les dimensions de la jupe et de la pluralité de supports sont déterminées de façon à créer l'espace entre la paroi latérale du récipient et la paroi latérale de la coupelle.

La partie supérieure étant amovible, ce qui facilite le remplissage de la réserve d'eau, c'est-à-dire de la coupelle, il est ainsi possible de maitriser la quantité d'eau ajoutée et, éventuellement, d'enlever le trop-plein. Ainsi, lors de cette opération de remplissage de la coupelle, il est possible de déposer la partie supérieure du dispositif à côté de la coupelle sans abîmer les racines qui se seraient développées à l'extérieur du contenant de culture, et ce grâce à la présence d'une jupe.

De manière avantageuse, la partie supérieure et la partie inférieure du dispositif ne sont en contact physique qu'au niveau de la jupe et de la coupelle ou qu'au niveau de la surface d'appui et de la pluralité de supports.

Selon un mode de réalisation particulier, l'espace ménagé entre la partie supérieure et la partie inférieure peut présenter une partie évasée, facilitant le remplissage de la coupelle qui sert de réserve d'eau et ce, sans avoir à séparer les parties supérieure et inférieure du dispositif.

Selon un mode de réalisation particulier, la partie supérieure peut également comprendre des poignées. Ce mode de réalisation est particulièrement adapté aux végétaux volumineux, par exemple les arbustes ou les arbres pouvant être en pots (palmiers, oliviers...).

De manière avantageuse, un capteur de niveau d'eau, avantageusement un capteur de présence d'eau, est placé à l'intérieur de ce récipient, avantageusement, le long de sa paroi latérale. Ce capteur est avantageusement un capteur électronique ayant une ou plusieurs sondes atteignant la coupelle, avantageusement le fond de la coupelle.

Le capteur est avantageusement amovible. Il peut notamment être retenu par une niche sans fond en saillie de la paroi latérale du récipient, évitant ainsi toute accumulation d'eau ou d'humidité.

De manière avantageuse, le capteur peut présenter un signal lumineux. En fonction de la couleur de ce signal ou simplement de son apparition, l'utilisateur saura si la coupelle comprend de l'eau ou non. Dans ce cas, le récipient comprend une ouverture au niveau de sa paroi latérale de manière à pouvoir visualiser le signal émis par le capteur.

Le capteur peut également signaler le manque d'eau au moyen d'une application mobile dédiée.

De manière avantageuse, la paroi latérale du récipient est dépourvue d'ouvertures, comme des trous ou des fentes. Elle est avantageusement pleine. Toutefois, dans le cas particulier de la présence d'un capteur d'eau, la paroi latérale du récipient peut comprendre un trou permettant de visualiser le signal émis par le capteur.

De manière avantageuse, lorsqu'elle est présente la jupe repose sur le fond de la coupelle. Dans ce cas, la partie supérieure et la partie inférieure sont en contact physique au niveau de la jupe et du fond de la coupelle.

Selon un autre mode de réalisation, la jupe peut reposer contre un rebord interne de la coupelle, ou contre des ergots en saillie de la paroi de la coupelle (combinaison des deux modes de réalisation ci-dessus). Dans ce cas, la jupe n'est pas en contact physique avec le fond de la coupelle.

La jupe peut être amovible dans la mesure où elle peut être désolidarisée du récipient. Cependant, elle est avantageusement solidaire du récipient dans la mesure où la jupe et le récipient incluant la surface d'appui ajourée constituent avantageusement une seule pièce.

La jupe est ajourée. Elle comprend des ouvertures, par exemple des trous et/ou des fentes. De manière avantageuse, elle comprend des ouvertures (par exemple des fentes) qui ne s'étendent pas sur toute la hauteur de la jupe.

La pluralité (au moins trois) de supports peut être disposée autour de la paroi latérale de la coupelle mais aussi provenir du fond de la coupelle. La pluralité (au moins trois) de supports permet la libre circulation de l'air en ménageant des espaces entre chacun des supports.

La pluralité (au moins trois) de supports peut former une surface d'appui dans la coupelle (particulièrement adapté pour recevoir un contenant de culture) ou dans le récipient (particulièrement adapté pour recevoir un contenant de culture ou pour recevoir un substrat de culture).

La surface d'appui ajourée comprend plusieurs ouvertures. Ces ouvertures peuvent permettre le passage des racines des végétaux, même si cela n'est pas essentiel à l'aération racinaire. Il peut s'agir de trous et/ou de fentes.

Dans le cas de l'utilisation du récipient comme cache-pot, c'est sur cette surface d'appui ajourée que repose le contenant de culture.

Comme déjà indiqué, la partie supérieure et la partie inférieure du dispositif sont indépendantes. Elles peuvent néanmoins être solidarisées au moyen d'attaches, par exemple des clips, avantageusement à l'intérieur du dispositif. Ces moyens d'attaches peuvent être sur la paroi du récipient et/ou sur la paroi de la coupelle. Ils peuvent également être constituées par la paroi ajourée de la jupe qui s'enclencherait sur une partie femelle au niveau du fond de la coupelle. Ils peuvent également être constituées par la surface d'appui qui s'enclencherait sur une partie mâle au niveau de la pluralité de supports de la coupelle.

La solidarisation de la partie supérieure et de la partie inférieure permet de faciliter le déplacement du dispositif, au même titre que la présence éventuelle de poignées.

La coupelle est constituée d'un fond et d'une paroi latérale. Elle ne comprend pas d'ouvertures. De manière avantageuse, la paroi latérale présente une hauteur identique tout autour de la coupelle.

Le dispositif (parties inférieure et supérieure) selon l'invention peut être en tout matériau. Il peut notamment être en terre cuite, en plastique, en composite, en métal.... Ce dispositif est avantageusement fabriqué par moulage ou par fabrication itérative par exemple par impression tridimensionnelle. Les parties supérieure et inférieure du dispositif étant avantageusement indépendantes l'une de l'autre, elles sont avantageusement réalisées indépendamment l'une de l'autre.

Dans le cas de l'utilisation du récipient comme cache-pot, le contenant de culture comprenant les végétaux peut également être en tout matériau, notamment en terre cuite, en plastique, en composite, en métal, en textile, en textile imprégné de microorganismes (biofiltre)... Il peut se présenter sous la forme d'un bac comprenant une fond ajouré (trous et/ou fentes) et/ou des parois latérales ajourées (trous et/ou fentes).

Ainsi, le contenant de culture peut être en matériau perméable à l'air et à l'eau. Dans ce cas, le contenant de culture ne nécessite pas de trous de drainage.

De manière avantageuse, le dispositif est de forme cylindrique ou conique.

De manière générale, la partie supérieure présente un pourtour (le cas échéant, supérieur au pourtour de la jupe) supérieur au pourtour du fond de la coupelle.

Dans le cas d'une forme conique, le diamètre du dispositif diminue depuis le haut de la partie supérieure du récipient vers le fond de la coupelle.

L'homme du métier saura adapter le volume de ce dispositif en fonction des dimensions du contenant de culture et/ou de la nature et des dimensions des végétaux considérés. Il saura également adapter l'ajourage de la paroi de la jupe ou de la surface d'appui du récipient de la partie supérieure.

Toutefois, l'espace ménagé entre le récipient et la coupelle est avantageusement compris entre 0,5 millimètres et 50 centimètres plus avantageusement de 1 mm à 10 cm, encore plus avantageusement de 1 mm à 3 cm, encore plus avantageusement de 1 mm à 10 mm, encore plus avantageusement de 1 mm à 5 mm.

Cet espace représente la distance entre d'une part la paroi du récipient de la partie supérieure et d'autre part la paroi de la coupelle.

Comme déjà indiqué, cet espace favorise une bonne circulation de l'air à la base du récipient, donc l'aération du substrat et par conséquent la respiration racinaire.

En outre, la surface d'appui ajourée n'est pas en contact physique avec le fond de la coupelle.

En outre, un filtre stoppant les insectes peut être positionné au niveau de l'espace ménagé entre le récipient et la coupelle, par exemple une grille. Ce mode de réalisation permet d'éviter l'éventuelle prolifération d'insectes de type moustiques dans l'eau contenue dans la coupelle.

Le dispositif peut également comprendre un dispositif esthétique par exemple un rebord amovible positionné sur la partie supérieure du récipient de manière à cacher le contenant de culture et au moins en partie le substrat. Ce rebord amovible peut être en deux parties, de manière à favoriser sa mise en place. Il peut être en toute matière, identique ou différente de celle du récipient, de la jupe et de la coupelle

La partie extérieure du dispositif peut notamment comprendre des motifs, une impression ou une surface texturée afin de modifier son aspect esthétique.

Le dispositif peut également comprendre un biofiltre, par exemple le biofiltre décrit dans le document dans la demande de brevet FR 3 097 405. Il peut s'agir d'un textile imprégné de microorganismes.

L'homme du métier saura adapter les dimensions du dispositif selon l'invention (hauteur, épaisseur des parois ou de la surface d'appui et pourtour) en fonction des végétaux. De manière générale, le volume intérieur du récipient peut être compris entre 1 L et 50 L, plus avantageusement entre 1 L et 10 L.

Selon un mode de réalisation particulier, une mèche ou un textile peut être utilisé afin de favoriser l'alimentation en eau de la plante. De manière générale, cette mèche ou ce textile s'étendent depuis le substrat vers la coupelle.

Ce textile peut notamment être un biofiltre, par exemple le biofiltre décrit dans le document dans la demande de brevet FR 3 097 405.

Selon un mode de réalisation avantageux, le dispositif peut comprendre un contenant de culture en textile biofiltre, préférentiellement muni d'une mèche pouvant également être en textile biofiltre.

Ainsi, le contenant de culture peut être en textile imprégné de microorganismes faisant office de biofiltre.

Le contenant de culture en textile, avantageusement en biofiltre, peut comprendre une mèche, qui est avantageusement solidarisée au biofiltre par couture ou collage, préférentiellement à l'extérieur du contenant de culture. La mèche s'étend donc de la paroi du contenant de culture vers la coupelle, le contenant de culture en biofiltre favorisant l'alimentation en eau par capillarité.

Outre les racines qui peuvent atteindre l'eau contenue dans la coupelle, l'alimentation en eau peut donc également être assurée par capillarité grâce à la mèche ou au textile.

Lorsqu'elle est présente et dans le cas où il faut la solidariser avec le substrat, la mèche peut être soutenue au moyen d'un porte-mèche enfoncé dans le substrat.

Selon un autre mode de réalisation, la mèche peut aussi être rigide et plantée directement dans le substrat. Dans le cas de l'utilisation du récipient en tant que cache-pot et de l'utilisation d'un sac de culture en textile, la mèche peut aussi être solidarisée au sac, lui-même perméable à l'eau.

S'agissant du biofiltre, il permet notamment de dépolluer et d'humidifier l'air. Il s'agit d'un biofiltre associant une épuration biologique de composés polluants à traiter d'une matrice (air, gaz ou liquide) par cultures microbiennes fixées sur un support.

Ce biofiltre comprend généralement un support à base de fibres synthétique et/ou végétales, imprégné de microorganismes, ledit support comprenant au moins deux faces principales. Ce support est avantageusement un non-tissé.

Les microorganismes peuvent notamment être choisis dans le groupe constitué des genres suivants : *Bacillus ; Rhodococcus ; Pseudomonas ; Micrococcus ; Phanerochaete* ; *Yarrowia* ; *Trichoderma* ; et leurs mélanges.

D'autre part, les fibres végétales du biofiltre sont avantageusement choisies dans le groupe comprenant les fibres de lin, les fibres de chanvre et les fibres de blé. Ces fibres présentent une longueur moyenne avantageusement comprise entre 5 cm et 25 cm

De manière avantageuse, le biofiltre est un non-tissé pouvant présenter une épaisseur moyenne comprise entre 1 mm et 10 mm, avantageusement entre 2 mm et 4 mm.

De manière générale, le biofiltre est positionné dans un couloir de circulation d'air. Plus précisément, le biofiltre est avantageusement positionné de manière à ce qu'une face principale du biofiltre soit exposée à l'air, et à ce que l'autre face principale du biolfiltre soit en contact physique avec un substrat pour la culture végétale.

La présente invention et les avantages qui en découlent ressortiront mieux des figures et exemples suivants donnés afin d'illustrer l'invention et non de manière limitative.

### Description des figures

[Fig.1] La figure 1 illustre une vue du dispositif selon l'invention de forme conique.
[Fig.2] La figure 2 illustre les parties supérieure et inférieure du dispositif selon l'invention.
[Fig.3] La figure 3 illustre le dispositif selon l'invention vue de dessus.
[Fig.4] La figure 4 illustre le dispositif selon l'invention vue de dessus et intégrant un capteur électronique dans le récipient de la partie supérieure.
[Fig.5] La figure 5 illustre une vue en coupe du dispositif selon l'invention.
[Fig.6] La figure 6 illustre un capteur électronique comprenant une sonde d'humidité.
[Fig.7] La figure 7 illustre un porte-mèche facilitant l'alimentation en eau de la plante.
[Fig.8] La figure 8 illustre une vue en coupe du dispositif selon l'invention dans lequel le récipient est utilisé en tant que cache-pot ; il intègre un contenant de culture et une mèche souple soutenue par un porte-mèche facilitant l'alimentation en eau de la plante par capillarité depuis la coupelle.

### Description détaillée de l'invention

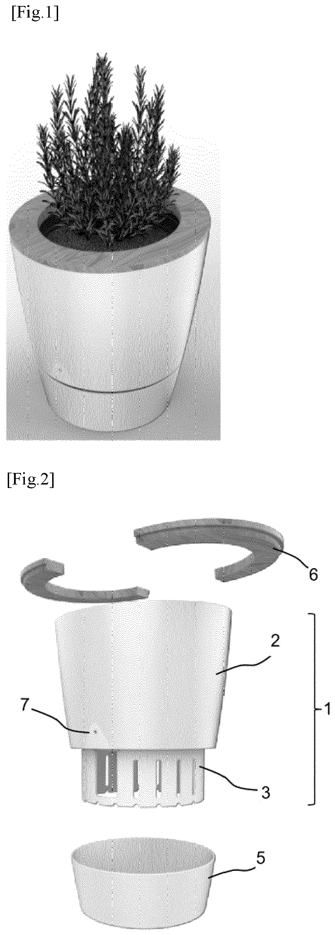

Les modes de réalisation particuliers illustrés par les figures 1 à 8 peuvent également être intégrés dans les modes de réalisation décrits ci-dessus.

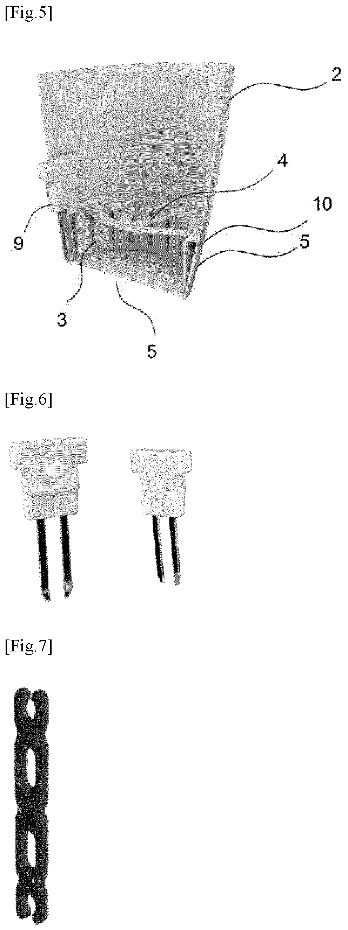

Les figures 1 à 5 et 8 représentent un mode de réalisation du dispositif selon l'invention destiné à recevoir un contenant de culture (figures 1-5 et 8) ou un substrat de culture (figures 1-5), de forme conique pouvant être muni d'un capteur d'eau, notamment d'un capteur électronique muni d'une sonde (figure 6).

Le dispositif pour recevoir un contenant de culture selon les figures 1 à 5 et 8 comprend :
1/ une partie supérieure (1) amovible comprenant :
   (a) un récipient (2) muni d'une jupe ajourée (3) et comprenant une surface d'appui ajourée (4) pouvant recevoir du substrat de culture végétale ou un contenant de culture (11) de végétaux,
2/ une partie inférieure comprenant une coupelle (5) formée par un fond et une paroi latérale,
un espace (10) étant ménagé entre la partie supérieure et la partie inférieure, de manière à assurer la circulation de l'air au niveau de la surface d'appui ajourée (4).

Dans ce dispositif, la surface d'appui ajourée (4) de la partie supérieure (1) n'est pas en contact physique avec la paroi latérale de la coupelle (5) de la partie inférieure.

D'autre part, la paroi latérale de la coupelle (5) n'est pas en contact physique avec la paroi latérale du récipient (2).

Selon ce mode de réalisation particulier, la partie supérieure est en contact physique avec la partie inférieure uniquement au niveau de la paroi latérale de la jupe et du fond de la coupelle.

La coupelle est avantageusement constituée d'un fond et d'une paroi latérale continue s'étendant à la périphérie du fond.

De manière générale, la jupe et la coupelle sont configurées de sorte à ce que la jupe s'engage dans la coupelle et de sorte à ménager un espace continu ou discontinu entre la partie supérieure et la partie inférieure du dispositif.

La figure 1 illustre un mode de réalisation particulier d'un ensemble de culture de végétaux comprenant le dispositif selon l'invention et une plante. Il comprend en outre un rebord amovible (6) permettant de masquer au moins partiellement le substrat, et, le cas échéant le contenant de culture disposé dans le récipient. Le récipient de la partie supérieure comprend un trou (7) permettant de visualiser le signal émis par un capteur d'eau (8) positionné à l'intérieur du dispositif.

La figure 2 illustre une vue éclatée du dispositif selon l'invention muni d'un rebord amovible.

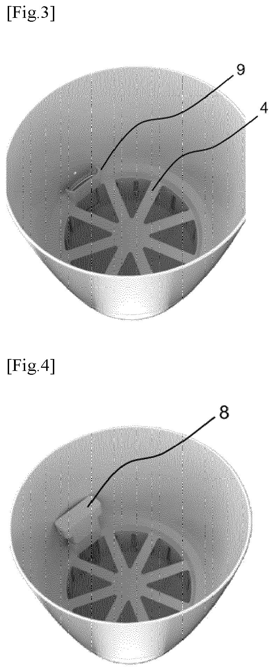

La figure 3 illustre le dispositif selon l'invention vue de dessus. Selon ce mode de réalisation, la partie supérieure comprend, sur la paroi latérale du récipient, une niche (9) permettant de loger un capteur d'eau. Elle comprend également un trou permettant de visualiser le signal émis par ce capteur. La figure 4 illustre la présence d'un capteur électronique logé dans la niche prévue à cet effet.

Selon le mode de réalisation de la figure 5, le dispositif selon l'invention comprend un capteur électronique ayant une sonde atteignant la coupelle. Ce capteur est illustré plus en détail par la figure 6.

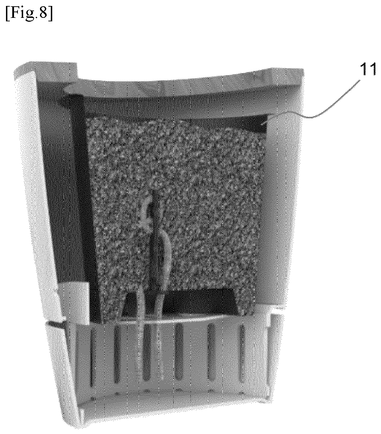

Comme déjà indiqué, le dispositif selon l'invention peut comprendre une mèche facilitant l'apport d'eau, depuis la coupelle vers le contenant de culture. Ce type de mèche, quand elle est souple, est avantageusement supportée par un porte-mèche tel que celui de la figure 7. L'utilisation d'une mèche supportée par un porte-mèche est représentée par la figure 8.

## Revendications

1. Dispositif pour recevoir des végétaux comprenant :
1/ une partie supérieure comprenant :
- un récipient comprenant une surface d'appui ajourée horizontale comprenant des ouvertures et une paroi latérale qui s'étend autour de la surface d'appui, la surface d'appui et au moins une partie de la paroi latérale du récipient délimitant un volume interne adapté pour recevoir du substrat et des végétaux, ou un contenant de culture végétale,
2/ une partie inférieure comprenant :
- une coupelle comprenant une paroi latérale délimitée par un fond et une surface supérieure ouverte, le fond et la paroi latérale de la coupelle délimitant un volume interne adapté pour contenir un liquide,
le dispositif présentant un élément de rehaussement, comprenant des ouvertures pour le passage de l'air, qui ménage un espace entre la base du récipient et la surface supérieure ouverte de la coupelle,
la surface d'appui ajourée étant située au-dessus de la surface ouverte de la coupelle.

2. Dispositif selon la revendication 1, ***caractérisé* en ce que** le dispositif présente un espace continu entre la paroi latérale du récipient et la paroi latérale de la coupelle en regard l'une de l'autre.

3. Dispositif selon la revendication 1 ou 2, ***caractérisé* en ce que** le dispositif comprend un capteur d'eau électronique.

4. Dispositif selon l'une des revendications 1 à 3, ***caractérisé* en ce que** l'espace entre la paroi latérale du récipient et la paroi latérale de la coupelle est compris entre 0,5 millimètres et 50 centimètres plus avantageusement de 1 mm à 10 cm, encore plus avantageusement de 1 mm à 3 cm, encore plus avantageusement de 1 mm à 10 mm, encore plus avantageusement de 1 mm à 5 mm.

5. Dispositif selon l'une des revendications 1 à 4, ***caractérisé* en ce que** le dispositif comprend un biofiltre.

6. Dispositif selon l'une des revendications 1 à 5, ***caractérisé* en ce que** le dispositif comprend un biofiltre constitué d'un textile imprégné de microorganismes.

7. Dispositif selon l'une des revendications 1 à 6, ***caractérisé* en ce que** le dispositif comprend, en tant qu'élément de rehaussement, une jupe fixée au récipient, séparée du volume interne par la surface d'appui, ladite jupe comprenant une paroi latérale ajourée, la jupe étant partiellement insérée dans la coupelle.

8. Dispositif selon la revendication 7, ***caractérisé* en ce que** la partie supérieure et la partie inférieure sont en contact physique uniquement au niveau de la jupe et du fond de la coupelle.

9. Dispositif selon l'une des revendications 1 à 6, ***caractérisé* en ce que** la coupelle comprend une pluralité de supports en tant qu'élément de rehaussement, la surface d'appui ou la paroi latérale du récipient reposant sur la pluralité de supports.

10. Dispositif selon la revendication 9, ***caractérisé* en ce que** la partie supérieure et la partie inférieure sont en contact physique uniquement au niveau de la surface d'appui du récipient et de la pluralité de supports de la coupelle.

11. Dispositif selon l'une des revendications 1 à 10, ***caractérisé* en ce que** la paroi latérale du récipient et la paroi latérale de la coupelle sont dans le prolongement l'une de l'autre.

12. Dispositif selon l'une des revendications 1 à 11, ***caractérisé* en ce que** la surface d'appui ajourée est située dans l'espace entre la base du récipient et la surface supérieure ouverte de la coupelle.

13. Dispositif selon l'une des revendications 1 à 12, ***caractérisé* en ce que** la coupelle présente un fond plat.

14. Dispositif selon l'une des revendications 1 à 13, ***caractérisé* en ce que** la surface d'appui ajourée présente un seul niveau horizontal ou au moins deux niveaux horizontaux.

15. Dispositif selon l'une des revendications 1 à 14, ***caractérisé* en ce que** la surface d'appui ajourée présente plusieurs niveaux horizontaux, son niveau principal étant en dessous de la partie basse de la paroi latérale du récipient.
